# EUROPEAN PATENT APPLICATION

(11) **EP 4 545 489 A1**
(43) Date of publication of application: **30.04.2025**
(21) Application number: 24208298.0
(22) Date of filing: 23.10.2024
(51) Int. Cl.: C01G 53/50

(54) **POSITIVE ELECTRODE ACTIVE MATERIALS, POSITIVE ELECTRODES, AND RECHARGEABLE LITHIUM BATTERIES**

(30) Priority: 27.10.2023 KR 20230145381
(71) Applicant: SAMSUNG SDI CO., LTD., Yongin-si, Gyeonggi-do 17084 (KR)
(72) Inventor: KIM, Young-Ki, 17084 Yongin-si (KR); KONG, Youngsun, 17084 Yongin-si (KR); CHOO, Sung Ho, 17084 Yongin-si (KR); KANG, Seok Mun, 17084 Yongin-si (KR); DOO, Sungwook, 17084 Yongin-si (KR); YOON, Jaesang, 17084 Yongin-si (KR); KANG, Gwiwoon, 17084 Yongin-si (KR); JUN, Dowook, 17084 Yongin-si (KR); KANG, Byungwuk, 17084 Yongin-si (KR); JEONG, Jaeyong, 17084 Yongin-si (KR)
(74) Representative: Marks & Clerk LLP

(57) **Abstract**

Disclosed are a positive electrode active material, a positive electrode including the same, and a rechargeable lithium battery, the positive electrode active material including a first positive electrode active material including a layered lithium nickel-manganese-based composite oxide, and a second positive electrode active material including a lithium-manganese rich composite oxide, in which a molar ratio of lithium to a total metal excluding lithium is about 1.1 to about 3 and a manganese content is greater than or equal to about 50 mol% based on 100 mol% of a total metal excluding lithium in the lithium-manganese rich composite oxide.

## Description

### BACKGROUND

### 1. Field

Positive electrode active materials, positive electrodes including the same, and rechargeable lithium batteries including the same are disclosed.

### 2. Description of the Related Art

A portable information device such as a cell phone, a laptop, smart phone, and/or the like and/or an electric vehicle has used a rechargeable lithium battery having high energy density and easy portability as a driving power source. Recently, research has been actively conducted to use a rechargeable lithium battery having high energy density as a driving power source and/or power storage power source for hybrid and/or electric vehicles.

Various positive electrode active materials have been investigated to realize rechargeable lithium batteries for applications to the uses. Among them, lithium nickel-based oxide, lithium nickel manganese cobalt composite oxide, lithium nickel cobalt aluminium composite oxide, and lithium cobalt oxide are mainly used as positive electrode active materials. However, while the use of large-sized, high-capacity, or high-energy-density rechargeable lithium batteries has recently increased, the supply of a positive electrode active material containing cobalt, a rare metal, is expected to be severely short. Because cobalt is expensive and lacks remaining reserves, there is an interest in developing a positive electrode active material excluding cobalt or using it in a reduced amount.

### SUMMARY

Some embodiments of the present disclosure provide a positive electrode active material that exhibits high density, high capacity, and long cycle-life characteristics, a positive electrode including the same, and a rechargeable lithium battery including the same.

In some embodiments, a positive electrode active material includes a first positive electrode active material including a layered lithium nickel-manganese-based composite oxide and a second positive electrode active material including a lithium-manganese-rich composite oxide in which a molar ratio of lithium to a total metal excluding lithium is about 1.1 to about 3 and a manganese content is greater than or equal to about 60 mol% based on 100 mol% of a total metal excluding lithium in the lithium-manganese-rich composite oxide.

In some embodiments, a positive electrode active material includes a first positive electrode active material comprising a layered lithium nickel-manganese-based composite oxide and a second positive electrode active material comprising a lithium-manganese-rich composite oxide in which a molar ratio of lithium is greater than or equal to about 60 mol% based on 100 mol% of a total metal excluding lithium in the lithium-manganese-rich composite oxide.

In some embodiments, a positive electrode includes a positive electrode current collector and a positive electrode active material layer on the positive electrode current collector, wherein the positive electrode active material layer includes the aforementioned positive electrode active material.

In some embodiments, a rechargeable lithium battery includes the aforementioned positive electrode, a negative electrode, and an electrolyte.

At least some of the above and other features of the invention are set out in the claims.

The positive electrode active material according to some embodiments may maximize or increase capacity, while minimizing or reducing a production cost, to ensure long cycle-life characteristics and improve high-voltage characteristics and high-temperature storage characteristics. When the positive electrode active material is applied to a rechargeable lithium battery, high initial charge/discharge capacity and efficiency may be achieved under high-voltage operating conditions, long cycle-life characteristics may be realized, and an amount of gas generated due to the high-voltage and high-temperature operation may be effectively suppressed or reduced.

### BRIEF DESCRIPTION OF THE DRAWINGS

The accompanying drawings, together with the specification, illustrate embodiments of the subject matter of the present disclosure, and, together with the description, serve to explain principles of embodiments of the subject matter of the present disclosure.
FIG. 1 is a cutaway perspective view schematically showing a rechargeable lithium battery according to some embodiments.
FIG. 2 is a cross-sectional view schematically showing a rechargeable lithium battery according to some embodiments.
FIGS. 3-4 are perspective views schematically showing rechargeable lithium batteries according to some embodiments.
FIGS. 5-6 are scanning electron microscope (SEM) images of large particles of the first positive electrode active material prepared in Example 1.
FIGS. 7-8 are SEM images of small particles of the first positive electrode active material prepared in Example 1.
FIGS. 9-10 are SEM images of the second positive electrode active material prepared in Example 1.
FIG. 11 is a graph comparing the density of positive electrode active material layers prepared in Example 1 and Comparative Example 1.

### DETAILED DESCRIPTION

Hereinafter, example embodiments will be described in more detail so that those of ordinary skill in the art can easily implement them. However, the subject matter of this disclosure may be embodied in many different forms and should not be construed as limited to the example embodiments set forth herein.

The terminology used herein is used to describe embodiments only, and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and/or the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, numbers, steps, elements, or a combination thereof.

In the drawings, the thickness of layers, films, panels, regions, etc., may be exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In embodiments, "layer" herein includes not only a shape provided on the whole surface when viewed from a plan view, but also a shape provided on a partial surface.

In embodiments, the average particle diameter may be measured by any suitable method generally used in the art, for example, by a particle size analyzer, and/or by a transmission electron microscope image and/or a scanning electron microscope image. In embodiments, it is possible to obtain an average particle diameter value by measuring using a dynamic light scattering method, performing data analysis, counting the number of particles for each particle size range, and calculating from this. Unless otherwise defined, the average particle diameter may mean the diameter (D₅₀) of particles having a cumulative volume of 50 volume% in the particle size distribution. As used herein, when a definition is not otherwise provided, the average particle diameter (D₅₀) means a diameter of particles having a cumulative volume of 50 volume% in the particle size distribution that is obtained by measuring the size (diameter or length of the major axis) of about 20 particles at random in a scanning electron microscope image.

Herein, "or" is not to be construed as an exclusive meaning, for example, "A or B" is construed to include A, B, A+B, and/or the like.

"Metal" is interpreted as a concept including ordinary metals, transition metals and metalloids (semi-metals).

### Positive Electrode Active Material

In some embodiments, a positive electrode active material includes a first positive electrode active material including a layered lithium nickel-manganese-based composite oxide and a second positive electrode active material including a lithium-manganese rich composite oxide in which a molar ratio of lithium to a total metal excluding lithium is about 1.1 to about 3 and a manganese content is greater than or equal to about 50 mol% based on 100 mol% of a total metal of the lithium-manganese rich composite oxide excluding lithium.

The positive electrode active material may exclude expensive cobalt or may contain a very small amount of cobalt, and contains low-cost manganese, thereby lowering the cost of the positive electrode active material and facilitating mass production of the positive electrode active material. The positive electrode active material has excellent characteristics at high voltage, realizes high density characteristics, and increases capacity. Because these positive electrode active materials are low-cost and satisfy the characteristics of high capacity, high voltage, and high density, they can enable long-distance driving when a rechargeable lithium battery using them is mounted on an electric vehicle or hybrid vehicle.

The first positive electrode active material may be included in an amount of about 60 wt% to about 95 wt%, for example about 70 wt% to about 95 wt% or about 80 wt% to about 90 wt% and the second positive electrode active material may be included in an amount of about 5 wt% to about 40 wt%, for example about 5 wt% to about 30 wt% or about 10 wt% to about 20 wt% based on a total 100 wt% of the first positive electrode active material and the second positive electrode active material. If they are mixed together within the above ratios, high capacity may be achieved while maximizing or increasing energy density.

### First Positive Electrode Active Material

As the price of cobalt, a rare metal, has recently risen sharply, there is a demand for the development of positive electrode active materials that exclude cobalt or reduce its content. Among them, a positive electrode active material having an olivine crystal structure such as lithium iron phosphate (LFP), lithium manganese phosphate (LMP), lithium manganese iron phosphate (LMFP), and/or the like and/or a spinel crystal structure such as lithium manganese oxide (LMO) and/or the like has a limitation in realizing high capacity due to a small available lithium amount within the structure. The layered nickel-manganese positive electrode active material has excellent capacity and efficiency characteristics due to the high amount of lithium available in the structure, making it suitable as a material for high-capacity batteries. However, as cobalt, which plays a key role in the layered structure, is removed, structural stability decreases, resistance (e.g., electrical resistance) increases, and it becomes difficult to secure long cycle-life characteristics. The layered nickel-manganese positive electrode active material, from which cobalt is excluded, may instead have a problem of accelerated side reaction with an electrolyte under high-voltage and high-temperature conditions, resultantly increasing gas generation and deteriorating cycle-life characteristics.

Accordingly, in some embodiments, by suitably or appropriately adjusting a ratio of nickel and manganese in the lithium nickel-manganese-based composite oxide, introducing other elements such as aluminium in addition to nickel and manganese, and/or introducing a uniform (or substantially uniform) coating layer by a suitable or appropriate coating method, a method for improving the capacity and cycle-life characteristics of the first positive electrode active material at high voltage is provided.

### Lithium Nickel-Manganese-Based Composite Oxide

A nickel content in the lithium nickel-manganese-based composite oxide may be greater than or equal to about 60 mol%, for example about 60 mol% to about 80 mol%, about 65 mol% to about 80 mol%, about 70 mol% to about 80 mol%, about 60 mol% to about 79 mol%, about 60 mol% to about 78 mol%, or about 60 mol% to about 75 mol% based on 100 mol% of a total metal excluding lithium in the layered lithium nickel-manganese-based composite oxide. If the nickel content satisfies the above ranges, high capacity can be achieved and structural stability can be increased even if the cobalt content is reduced.

The manganese content may be greater than or equal to about 15 mol%, for example about 15 mol% to about 40 mol%, about 15 mol% to about 35 mol%, about 15 mol% to about 30 mol%, or about 20 mol% to about 30 mol% based on 100 mol% of a total metal excluding lithium in the layered lithium nickel-manganese-based composite oxide. If the manganese content satisfies the above ranges, the positive electrode active material may improve structural stability while realizing high capacity.

The lithium nickel-manganese-based composite oxide may be, for example, a lithium nickel-manganese-aluminium-based composite oxide that further includes aluminium in addition to nickel and manganese. When the lithium nickel-manganese-based composite oxide includes aluminium, it is beneficial to maintain a stable layered structure even if the cobalt element is excluded from the structure. An aluminium content based on 100 mol% of the lithium nickel-manganese-aluminium-based composite oxide may be greater than 0 mol% and less than and equal to about 3 mol%, greater than or equal to about 0.1 mol%, greater than or equal to about 0.5 mol%, or greater than or equal to about 1 mol%, for example, about 1 mol% to about 3 mol%, about 1 mol% to about 2.5 mol%, about 1 mol% to about 2 mol%, or about 1 mol% to about 1.5 mol%. If the aluminium content satisfies the above ranges, a stable layered structure may be maintained even if cobalt is excluded, the problem of structure collapse due to charging and discharging may be suppressed or reduced, and long cycle-life characteristics of the positive electrode active material may be realized.

According to some embodiments, a concentration of aluminium within a particle including the lithium nickel-manganese-based composite oxide may be uniform (or substantially uniform). In embodiments, the foregoing means that there is no concentration gradient of aluminium from the center to the surface within the particle, or that the aluminium concentration in the external portion of the particle is neither higher nor lower than in the internal portion, and that the aluminium within the particle is evenly (or substantially evenly) distributed. The foregoing may be a structure obtained by using aluminium raw materials during precursor production without additional doping of aluminium during the synthesis of the lithium nickel-manganese-based composite oxide and thereby synthesizing a composite oxide using a nickel-manganese-aluminium-based hydroxide as a precursor. The particle may be in a form of a secondary particle in which a plurality of primary particles are agglomerated, and the aluminium content inside the primary particle may be the same or similar regardless of the location of the primary particle. In embodiments, if a primary particle is selected at a random position in the cross section of a secondary particle and the aluminium content is measured inside the primary particle rather than at its interface, regardless of the location of the primary particle, for example, whether the primary particle is close to the center of the secondary particle or close to the surface, the aluminium content may be the same/similar/uniform. In this structure, a stable layered structure can be maintained even if cobalt is absent or is present in a very small amount, and aluminium by-products and/or aluminium aggregates are not generated, so that the capacity, efficiency, and cycle-life characteristics of the positive electrode active material can be improved at the same time.

The lithium nickel-manganese-based composite oxide may be, for example, represented by Chemical Formula 1.

Chemical Formula 1 Liₐ₁Niₓ₁Mn_{y1}Al_{z1}M¹_{w1}O_{2-b1}X_{b1}

In Chemical Formula 1, 0.9≤a1 ≤1.8, 0.6≤x1 ≤0.8, 0.1 ≤y1 ≤0.4, 0≤z1 ≤0.03, 0 ≤w1≤0.3, 0.9≤x1+y1+z1+w1 ≤1.1, and 0≤b1 ≤0.1, M¹ is one or more elements selected from B, Ba, Ca, Ce, Cr, Fe, Mg, Mo, Nb, Si, Sn, Sr, Ti, V, W, Y and Zr, and X is one or more elements selected from F, P, and S.

In Chemical Formula 1, for example, 0.9≤a1 ≤1.5, or 0.9≤a1≤1.2. In embodiments, Chemical Formula 1 may contain aluminium, i.e. z1≠0, in which case 0.6 ≤x1 ≤0.8, 0.1 ≤y1 ≤0.39, 0.01 ≤z1 ≤0.03, and 0≤w1 ≤0.29 may be satisfied, and, for example, 0.6≤x1 ≤0.8, 0.1 ≤y1 ≤0.39, 0.01 <z1 ≤0.03, and 0≤w1 ≤0.29 may be satisfied.

In Chemical Formula 1, for example, 0.6≤x1 ≤0.79, 0.6≤x1 ≤0.78, 0.6≤x1 ≤ 0.75, 0.65≤x1 ≤0.8, or 0.7≤x1 ≤0.79; 0.1 ≤y1 ≤0.35, 0.1 ≤y1 ≤0.30, 0.1 ≤y1 ≤0.29, 0.15≤ y1 ≤0.39, or 0.2≤y1 ≤0.3; 0.01 ≤z1 ≤0.025, 0.01 <z1 ≤0.02, or 0.01 <z1 ≤0.019; and 0≤w1 ≤0.28, 0≤w1 ≤0.27, 0≤w1 ≤0.26, 0≤w1 ≤0.25, 0≤w1 ≤0.24, 0≤w1 ≤0.23, 0≤w1 ≤0.22, 0 ≤w1 ≤0.21, 0≤w1 ≤0.2, 0≤w1 ≤0.15, 0≤w1 ≤0.1, or 0≤w1 ≤0.09.

For example, the lithium nickel-manganese-based composite oxide may exclude, i.e. not include, cobalt or may include only a small amount of cobalt; a cobalt content may be about 0 mol% to about 0.01 mol% based on 100 mol% of a total metal excluding lithium in the lithium nickel-manganese-based composite oxide.

The particles including the lithium nickel-manganese-based composite oxide may be in a form of secondary particles provided by agglomerating a plurality of primary particles, single particles, or a combination thereof. The secondary particles and single particles may be spherical, elliptical, polyhedral, and/or irregular in shape, and the primary particles constituting the secondary particles may be spherical, elliptical, plate-shaped, or a combination thereof.

### Coating Layer

The first positive electrode active material may include core particles including the layered lithium nickel-manganese-based composite oxide and a coating layer on the surface of the core particles and containing Al, B, Mg, Ti, V, W, Y, Zr, or a combination thereof.

The lithium nickel-manganese-based composite oxide is susceptible to chemical attacks from components in an electrolyte, when a battery is operated under high-voltage or high-temperature conditions, and thus may have many side reactions with the electrolyte, resulting in an increase in an amount of gas generation and thereby, deteriorating battery cycle-life and safety, but these problems may be solved by introducing a coating layer according to some embodiments thereinto.

For example, the coating layer may be an Al coating layer containing Al and may further optionally contain B, Mg, Ti, V, W, Y, Zr, and/or the like. If the Al coating layer is introduced, high-voltage performance of the first positive electrode active material may be further improved.

Because the layered lithium nickel-manganese-based composite oxide has a significantly different content of residual lithium on the particle surface and different various suitable surface characteristics from oxides having a different composition such as lithium nickel-cobalt-manganese-based composite oxides, lithium nickel-cobalt-aluminium-based composite oxides, lithium cobalt-based oxides, and/or the like, it is believed to be impossible to provide it into a uniform and satisfactory coating layer in a conventional coating method. Accordingly, in some embodiments, the uniform coating layer may be introduced into the first positive electrode active material by a method of (i) adding a coating raw material to an aqueous solvent to prepare a coating solution in which the salt is completely dissolved in a salt-dissolution wet coating method, (ii) mixing the coating solution with core particles to coat them, and (iii) removing the solvent and then, drying and heat-treating the resultant. The foregoing is a salt-dissolution wet coating method and a pre-addition method, in which first completely dissolving the coating raw material of the salt, the active material particles (i.e., the core particles) are added thereto. Through this method, a uniform (or substantially uniform) and thin coating layer may be successfully provided on the surface of the layered lithium nickel-manganese-based composite oxide.

This coating method may further increase a content of coating elements on the active material particle surface, compared with a conventional dry method or a post-addition wet method. For example, the coating content on the surface of the first positive electrode active material measured through Energy Profiling - Energy Dispersive X-ray Spectroscopy (EP-EDS) analysis may be about 5 at% (atomic percent) to about 35 at%, for example about 5 at% to about 30 at%, about 5 at% to about 25 at%, or about 10 at% to about 20 at% based on 100 at% of a total metal excluding lithium on the surface. Within the above content ranges, the coating layer may not only increase resistance (e.g., electrical resistance) of the first positive electrode active material but also effectively improve high-voltage characteristics.

For example, the coating layer may be in a form of a film that continuously surrounds the surface of the core particles, for example may be in a form of a shell that continuously surrounds the entire surface of the core particles. This is distinct from a structure in which only portion of the surface of the core particle is partially coated. According to some embodiments, the coating layer may be provided to entirely cover the surface of the core particle and may be provided to be very thin and uniform (or substantially uniform) in thickness, and therefore the positive electrode active material does not increase resistance (e.g., electrical resistance) or decrease capacity, improves structural stability, effectively suppresses or reduces side reactions with electrolytes, reduces the amount of gas generated under high-voltage and high-temperature conditions, and achieves long cycle-life characteristics.

According to the method, a thickness of the coating layer of the first positive electrode active material may be about 5 nm to about 200 nm, for example about 5 nm to about 150 nm, about 5 nm to about 100 nm, about 5 nm to about 80 nm, about 5 nm to about 50 nm, or about 10 nm to about 50 nm. When the coating layer satisfies the above thickness ranges, the structural stability of the positive electrode active material may be improved without increasing resistance (e.g., electrical resistance) or reducing capacity due to the coating, and side reactions with the electrolyte may be effectively suppressed or reduced. The thickness of the coating layer may be measured through, for example, scanning electron microscopy (SEM), transmission electron microscopy (TEM), time of flight secondary ion mass spectrometry (TOF-SIMS), X-ray photoelectron spectroscopy (XPS), or energy dispersive X-ray spectroscopy (EDS) analysis and for example, the cross-section of the positive electrode active material may be measured through transmission electron microscopy-energy dispersive X-ray spectroscopy (TEM-EDS) line profile.

According to some embodiments, the coating layer may be thin and uniform (or substantially uniform) in thickness, at the level of several to hundreds of nanometers, for example, several to tens of nanometers. For example, the deviation in coating layer thickness within one positive electrode active material particle may be less than or equal to about 20%, less than or equal to about 18%, or less than or equal to about 15%. In embodiments, the deviation in coating layer thickness refers to the deviation in the coating layer thickness within one positive electrode active material particle. For example, the deviation of the coating layer thickness may be calculated by measuring the thickness of about 10 points in an electron microscope image of the cross-section of a single positive electrode active material particle to calculate an arithmetic average, and then dividing the absolute value of the difference between one measured data and the arithmetic mean value by the arithmetic mean value and multiplying by 100. The fact that the deviation or standard deviation of the coating layer thickness satisfies the above ranges means that a coating layer of uniform thickness is provided in a form of a film on the surface of the positive electrode active material particle. Accordingly, the structural stability of the positive electrode active material is improved, side reactions with the electrolyte are effectively suppressed or reduced, and the increase in resistance (e.g., electrical resistance) and/or decrease in capacity due to coating can be minimized or reduced.

The content of the coating element may vary depending on the type (or kind) of coating element, but may be approximately about 0.01 mol% to about 5 mol%, for example about 0.05 mol% to about 3 mol%, or about 0.1 mol% to about 2 mol% based on 100 mol% of a total metal excluding lithium in the entire first positive electrode active material.

For example, if introducing the Al coating layer, the Al content of the coating layer may be about 0.1 mol% to about 3.0 mol%, for example about 0.1 mol% to about 2.0 mol%, about 0.5 mol% to about 1.5 mol%, or about 0.7 mol% to about 1.3 mol% based on 100 mol% of a total metal excluding lithium in the entire first positive electrode active material.

If introducing the Al coating layer, the coating layer may include, for example, a layered aluminium compound, aluminium oxide, lithium-aluminium oxide, LiAlO₂, or a combination thereof.

### Large Particles and Small Particles

In some embodiments, the first positive electrode active material may include large particles including the layered lithium nickel-manganese-based composite oxide and having an average particle diameter (D₅₀) of about 10 µm to about 25 µm and small particles including the layered lithium nickel-manganese-based composite oxide and having an average particle diameter (D₅₀) of about 0.5 µm to about 8 µm. In embodiments, a positive electrode having high energy density may be realized. As used herein, when a definition is not otherwise provided, the average particle diameter (D₅₀) means a diameter of particles having a cumulative volume of 50 volume% in the particle size distribution that is obtained by measuring the size (diameter or length of the major axis) of about 20 particles at random in a scanning electron microscope image for positive electrode active materials.

The large particles may be in a form of secondary particles provided by agglomerating a plurality of primary particles. The small particles may be in a form of secondary particles or single particles.

The large particles may be included in an amount of about 60 wt% to about 95 wt% or about 70 wt% to about 90 wt% and the small particles may be included in an amount of about 5 wt% to about 40 wt% or about 10 wt% to about 30 wt% based on a total of 100 wt% of the large particles and the small particles.

If the first positive electrode active material includes the large particles and the small particles, the large particles may be included in an amount of about 40 wt% to about 90 wt%, the small particles may be included in an amount of about 5 wt% to about 40 wt%, and the second positive electrode active material may be included in an amount of about 5 wt% to about 30 wt% based on a total of 100 wt% of the large particles, the small particles, and the second positive electrode active material.

If the above mixing ratios are satisfied, energy density and capacity may be maximized.

For example, an average particle diameter (D₅₀) of the second positive electrode active material may be smaller than an average particle diameter (D₅₀) of the large particles and larger than an average particle diameter (D₅₀) of the small particles. In embodiments, the second positive electrode active material becomes a type (or kind) of medium-sized particles, and the positive electrode may be a mixture of large particles, medium-sized particles, and small particles, thereby maximizing or increasing energy density and effectively improving high-voltage characteristics.

In some embodiments, the large particles may include the core particles in the form of secondary particles provided by agglomerating a plurality of primary particles and a coating layer on the surface of the core particles of the large particles and containing Al, B, Mg, Ti, V, W, Y, Zr, or a combination thereof. In embodiments, the small particles may include the core particles in a form of single particles and the coating layer on the surface of the core particles of the small particles and containing Al, B, Mg, Ti, V, W, Y, Zr, or a combination thereof. In embodiments, performance at high voltages may be maximized or increased.

For example, the coating layer of the large particles may include Al, Zr, or a combination thereof and the coating layer of the small particles may include Al, Y, or a combination thereof. This may be a suitable or optimal coating component for large and small particles, and can further improve capacity characteristics and cycle-life characteristics at high voltage.

For example, the coating layer of the large particles may include Al and the Al content of the coating layer of the large particles may be about 0.5 mol% to about 2 mol% based on 100 mol% of a total metal excluding lithium in the large particles. In embodiments, the coating layer of the small particles may include Al and the Al content of the coating layer of the small particles may be about 0.1 mol% to about 1 mol% based on 100 mol% of a total metal excluding lithium in the small particles.

In embodiments, the coating layer of the small particles may further include Y, and the Y content of the coating layer of the small particles may be for example about 0.01 mol% to about 0.5 mol% based on 100 mol% of a total metal excluding lithium in the small particles.

In embodiments, the first positive electrode active material may include a sulfur (S) component on the surface, and this may be a characteristic derived by applying a sulfate-based coating material such as aluminium sulfate during the coating process.

### Second Positive Electrode Active Material

The second positive electrode active material includes lithium-manganese-rich (LMR) composite oxide. An LMR material, which is a layered positive electrode active material containing an excessive content of lithium and a relatively high content of manganese, may not only develop capacity through conventional oxidation-reduction of transition metals but also achieve high capacity by applying a new principle of oxidation-reduction of oxygen and concurrently (e.g., simultaneously), is attracting attentions as an ultra-low-cost next-generation positive electrode active material by including low-cost manganese in a high ratio.

In the second positive electrode active material, the molar ratio of lithium based on a total metal excluding lithium may be about 1.1 to about 3, for example about 1.2 to about 2.5, about 1.3 to about 2.3, or about 1.5 to about 2.1. In embodiments, the manganese content may be greater than or equal to about 60 mol%, for example about 60 mol% to about 90 mol%, about 60 mol% to about 80 mol%, about 60 mol% to about 75 mol%, about 60 mol% to about 70 mol%, or about 62 mol% to about 68 mol% based on 100 mol% of a total metal excluding lithium in the lithium-manganese-rich composite oxide.

The lithium-manganese-rich composite oxide of the second positive electrode active material may be, for example, represented by Chemical Formula 2.

Chemical Formula 2 Li₁₊ₓ₂(Ni_{y2}Mn_{z2}M²_{1-y2-z2})₁₋ₓ₂O_{2-b2}X_{b2}

In Chemical Formula 2, 0.04≤x2≤0.5, 0.1 ≤y2≤0.5, 0.5≤z2≤0.9, and 0≤b2≤ 0.1, M² is one or more elements selected from Al, B, Ba, Ca, Ce, Cr, Fe, Mg, Mo, Nb, Si, Sn, Sr, Ti, V, W, Y, and Zr, and X is one or more elements selected from F, P, and S.

In Chemical Formula 2, for example, 0.05≤x2≤0.4 or 0.06≤x2≤0.3 and 0.2≤ y2≤0.4 and 0.6≤z2≤0.8 or 0.3≤y2≤0.4 and 0.6≤z2≤0.7.

The second positive electrode active material may be in a form of secondary particles provided by agglomerating a plurality of primary particles and an average particle diameter (D₅₀) may be about 3 µm to about 13 µm, for example, about 4 µm to about 12 µm, 5 µm to about 10 µm, or 6 µm to about 9 µm.

The cobalt content may be about 0 mol% to about 0.01 mol% based on 100 mol% of a total metal excluding lithium in the lithium-manganese-rich composite oxide of the second positive electrode active material.

The second positive electrode active material may have an a lattice constant of greater than or equal to about 2.865 Å in an X-ray diffraction analysis (XRD), for example, greater than or equal to about 2.870 Å, or about 2.875 Å to about 2.885 Å. For example, the positive electrode active material may have an a lattice constant of greater than or equal to about 2.875 Å. In embodiments, a ratio of a c lattice constant to the a lattice constant may be less than or equal to about 4.968, for example, less than or equal to about 4.965, less than or equal to about 4.960, or about 4.955 to about 4.965. If the ratio of the c lattice constant to the a lattice constant of the positive electrode active material satisfies the above ranges, the voltage drop problem during charge and discharge according to the second positive electrode active material may be effectively improved, and in addition, energy density may be increased, and capacity characteristics and cycle-life characteristics in a high-voltage region may be improved.

The second positive electrode active material may have a residual lithium content of less than or equal to about 0.3 wt% on the surface, for example, less than or equal to about 0.2 wt%, less than or equal to about 0.1 wt%, or about 0.001 wt% to about 0.1 wt% based on 100 wt% of the second positive electrode active material. This feature may distinguish the positive electrode active material according to some embodiments from a high-nickel-based material having a nickel content of greater than about 70 mol%.

### Pellet Density

According to some embodiments, the positive electrode active material may achieve a high pellet density. For example, a pellet density of the positive electrode active material may be about 3.0 g/cc to about 3.7 g/cc, for example, about 3.1 g/cc to about 3.6 g/cc, or about 3.1 g/cc to about 3.5 g/cc. The rechargeable lithium batteries using these positive electrode active materials may achieve high energy density.

The pellet density may be measured in the following way.

The positive electrode active material is weighed out to be 3 g and put in a mold (an area: about 1.298 cm²), and a mold bar is slowly inserted into a mold main body. Subsequently, the mold set is placed in a hydraulic press and pressed at a pressure of about 4 tons (metric ton) for about 30 seconds to measure a height, which is used to obtain the pellet density.

### Positive Electrode

In some embodiments, a positive electrode includes a positive electrode current collector and a positive electrode active material layer on the positive electrode current collector, wherein the positive electrode active material layer includes the aforementioned positive electrode active material. The positive electrode active material layer may further include other types (or kinds) of positive electrode active materials in addition to the positive electrode active materials described above. In embodiments, the positive electrode active material layer may optionally further include a binder, a conductive material (e.g., an electrically conductive material), or a combination thereof.

According to some embodiments, a loading level of the positive electrode active material layer may be about 10 mg/cm² to about 40 mg/cm², for example about 10 mg/cm² to about 30 about mg/cm², or about 10 mg/cm² to about 20 mg/cm². In embodiments, a density of the positive electrode active material layer in the final compressed positive electrode may be about 3.3 g/cc to about 3.7 g/cc, for example about 3.3 g/cc to about 3.6 g/cc, or about 3.4 g/cc to about 3.58 g/cc, or about 3.5 g/cc to about 3.58 g/cc. When applying the positive electrode active material according to some embodiments, it is beneficial or advantageous to implement such a loading level and positive electrode density, and a positive electrode that satisfies the loading level and positive electrode density in the above ranges is suitable for implementing a high-capacity, high-energy-density rechargeable lithium battery.

### Binder

The binder may improve binding properties of positive electrode active material particles with one another and with a current collector. Examples of binders include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and/or nylon, but are not limited thereto.

### Conductive Material

The conductive material may be included to provide electrode conductivity (e.g., electrical conductivity) and any suitable electrically conductive material may be used as a conductive material unless it causes a chemical change (e.g., an undesirable chemical change in the rechargeable lithium battery). Examples of the conductive material include a carbon-based material such as natural graphite, artificial graphite, carbon black, acetylene black, ketjen black, a carbon fiber, a carbon nanofiber, a carbon nanotube, and the like; a metal-based material of a metal powder and/or a metal fiber including copper, nickel, aluminium, silver, and the like; a conductive polymer (e.g., an electrically conductive polymer) such as a polyphenylene derivative; or a mixture thereof.

Each content of the binder and the conductive material may be about 0.5 wt% to about 5 wt%, based on 100 wt% of the positive electrode active material layer.

The positive electrode current collector may include Al, but is not limited thereto.

### Rechargeable Lithium Battery

Some embodiments provide a rechargeable lithium battery including the aforementioned positive electrode, a negative electrode, and an electrolyte. As an example, the rechargeable lithium battery may include a positive electrode, a negative electrode, a separator between the positive electrode and the negative electrode, and an electrolyte solution.

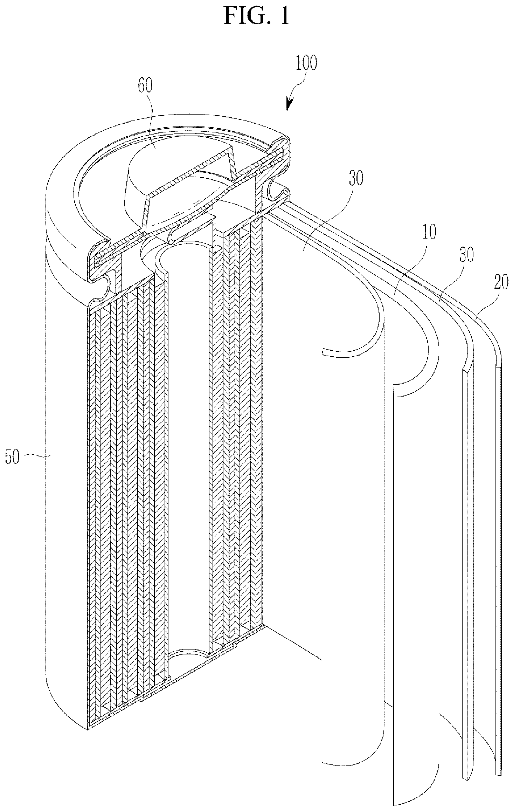

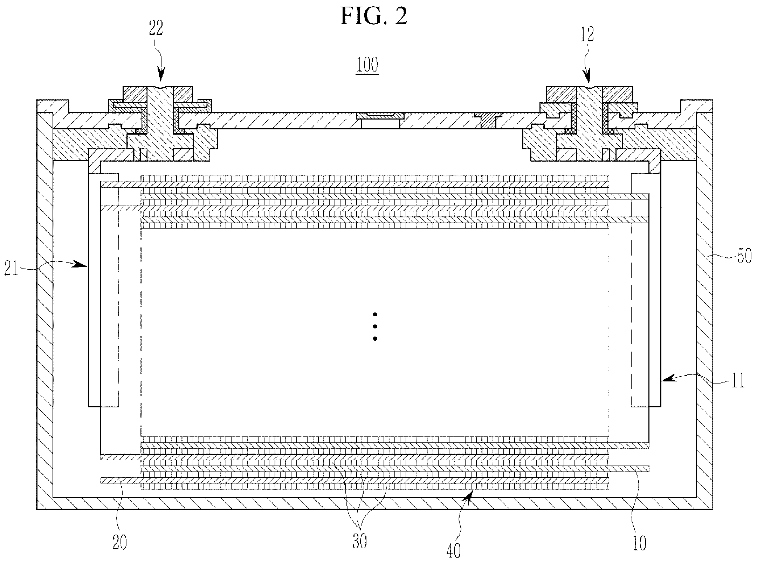

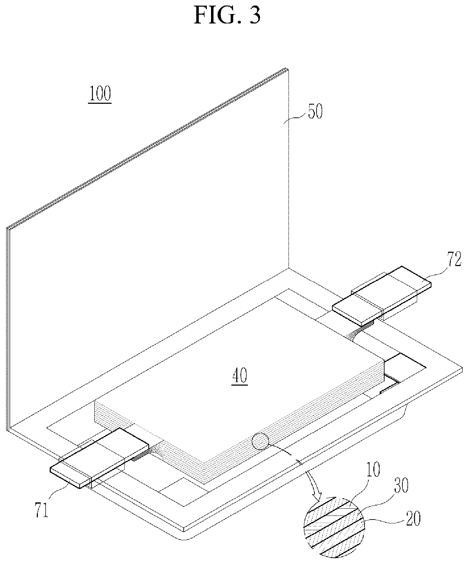

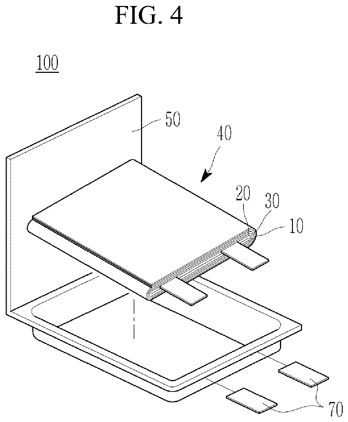

The rechargeable lithium battery may be classified into cylindrical, prismatic, pouch, coin, etc. depending on the shape. FIGS. 1-4 are schematic diagrams showing the rechargeable lithium battery according to some embodiments, where FIG. 1 is a cylindrical battery, FIG. 2 is a prismatic battery, and FIGS. 3-4 are each a pouch-shaped battery. Referring to FIGS. 1-4, a rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution. The rechargeable lithium battery 100 may include a sealing member 60 that seals the case 50 as shown in FIG. 1. In FIG. 2, the rechargeable lithium battery 100 may include a positive electrode lead tab 11, a positive electrode terminal 12, a negative lead tab 21, and a negative electrode terminal 22. As shown in FIGS. 3-4, the rechargeable lithium battery 100 includes an electrode tab 70 (FIG. 4), for example, a positive electrode tab 71 and a negative electrode tab 72 (FIG. 3) serving as an electrical path for inducing the current formed in the electrode assembly 40 to the outside.

The rechargeable lithium battery according to some embodiments may be rechargeable at a high voltage, or may be suitable for being driven at a high voltage and may be a battery having improved characteristics at a high voltage.

In the rechargeable lithium battery including a lithium-manganese-rich material as a second positive electrode active material, in order to use reversible positive electrode capacity of the second positive electrode active material, initial charging should be performed at about 4.60 V or higher, for example, about 4.65 V. Subsequent charging is carried out in a lower voltage range than the initial charging voltage, but because the rechargeable lithium battery according to some embodiments is designed to be driven in a high-voltage region, the charging may be performed in a voltage range of about 4.45 V or higher. For example, the charging voltage of the rechargeable lithium battery after the second cycle may be greater than or equal to about 4.45 V, about 4.45 V to about 4.7 V, about 4.45 V to about 4.6 V, or about 4.45 V to about 4.55 V. By applying the positive electrode active material according to some embodiments, the rechargeable lithium battery can significantly reduce an amount of gas generated even when charged at high voltage and can achieve high capacity and long cycle-life characteristics.

### Negative Electrode

The negative electrode may include a current collector and a negative electrode active material layer on the current collector, and may further include a negative electrode active material, a binder, a conductive material (e.g., an electrically conductive material), or a combination thereof.

### Negative Electrode Active Material

The negative electrode active material may include a material that reversibly intercalates/deintercalates lithium ions, a lithium metal, a lithium metal alloy, a material capable of doping/dedoping lithium, and/or a transition metal oxide.

The material that reversibly intercalates/deintercalates lithium ions may include, for example, crystalline carbon, amorphous carbon, or a combination thereof as a carbon-based negative electrode active material. The crystalline carbon may be irregular, and/or sheet, flake, spherical, and/or fiber shaped natural graphite and/or artificial graphite. The amorphous carbon may be a soft carbon, a hard carbon, a mesophase pitch carbonization product, calcined coke, and/or the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/de-doping lithium may be a Si-based negative electrode active material and/or a Sn-based negative electrode active material. The Si-based negative electrode active material may include silicon, a silicon-carbon composite, SiOₓ (0 < x < 2), a Si-Q alloy (wherein Q is an element selected from an alkali metal, an alkaline-earth metal, a Group 13 element, a Group 14 element (excluding Si), a Group 15 element, a Group 16 element, a transition metal, a rare earth element, and a combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, TI, Ge, P, As, Sb, Bi, S, Se, Te, Po, and a combination thereof), or a combination thereof. The Sn-based negative electrode active material may be Sn, SnO₂, a Sn alloy, or a combination thereof.

The silicon-carbon composite may be a composite of silicon and amorphous carbon. An average particle diameter (D₅₀) of the silicon-carbon composite particles may be, for example, about 0.5 µm to about 20 µm. According to some embodiments, the silicon-carbon composite may be in a form of silicon particles and amorphous carbon coated on the surface of the silicon particles. For example, it may include a secondary particle (core) in which silicon primary particles are assembled and an amorphous carbon coating layer (shell) on the surface of the secondary particle. The amorphous carbon may also be present between the silicon primary particles, and for example, the silicon primary particles may be coated with amorphous carbon. The secondary particles may exist dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon and/or hard carbon, a mesophase pitch carbonized product, and/or calcined coke.

When the silicon-carbon composite includes silicon and amorphous carbon, a content of silicon may be about 10 wt% to about 50 wt% and a content of amorphous carbon may be about 50 wt% to about 90 wt% based on 100 wt% of the silicon-carbon composite. In embodiments, when the composite includes silicon, amorphous carbon, and crystalline carbon, a content of silicon may be about 10 wt% to about 50 wt%, a content of crystalline carbon may be about 10 wt% to about 70 wt%, and a content of amorphous carbon may be about 20 wt% to about 40 wt% based on 100 wt% of the silicon-carbon composite.

In embodiments, a thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may exist as silicon alone, in a form of a silicon alloy, and/or in an oxidized form of silicon. The oxidized form of silicon may be represented by SiOₓ (0<x≤2). Herein, the atomic content ratio of Si:O, which indicates a degree of oxidation, may be about 99:1 to about 33:67. As used herein, when a definition is not otherwise provided, an average particle diameter (D₅₀) indicates a particle where a cumulative volume is about 50 volume% in a particle size distribution.

The Si-based negative electrode active material and/or Sn-based negative electrode active material may be mixed together with the carbon-based negative electrode active material. When the Si-based negative electrode active material and/or Sn-based negative electrode active material and the carbon-based negative electrode active material are mixed together and used, the mixing ratio may be a weight ratio of about 1:99 to about 90:10.

### Binder

The binder may serve to well adhere the negative electrode active material particles to each other and also to adhere the negative electrode active material to the current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting or increasing viscosity may be further included. As the cellulose-based compound, one or more of carboxymethyl cellulose, hydroxypropylmethyl cellulose, methyl cellulose, and alkali metal salts thereof may be mixed and used. The alkali metal may be Na, K, and/or Li.

The dry binder may be a polymer material capable of becoming fiber (e.g., capable of being fiberized), and may be, for example, polytetrafluoroethylene, polyvinylidene fluoride, a polyvinylidene fluoride-hexafluoropropylene copolymer, polyethylene oxide, or a combination thereof.

### Conductive Material

The conductive material may be included to provide electrode conductivity (e.g., electrical conductivity) and any suitable electrically conductive material may be used as a conductive material unless it causes a chemical change (e.g., an undesirable chemical change in the rechargeable lithium battery). Examples of the conductive material include a carbon-based material such as natural graphite, artificial graphite, carbon black, acetylene black, ketjen black, a carbon fiber, a carbon nanofiber, a carbon nanotube, and the like; a metal-based material of a metal powder and/or a metal fiber including copper, nickel, aluminium, silver, and the like; a conductive polymer (e.g., an electrically conductive polymer) such as a polyphenylene derivative; or a mixture thereof.

A content of the negative electrode active material may be about 95 wt% to about 99.5 wt% based on 100 wt% of the negative electrode active material layer, and a content of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

### Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), and/or an alloy thereof, and may be in a form of a foil, sheet, and/or foam. A thickness of the negative electrode current collector may be, for example, about 1 µm to about 20 µm, about 5 µm to about 15 µm, or about 7 µm to about 10 µm.

### Electrolyte

For example, the electrolyte for a rechargeable lithium battery may be an electrolyte solution, which may include a non-aqueous organic solvent and a lithium salt.

The non-aqueous organic solvent serves as a medium that transmits ions taking part in the electrochemical reaction of a battery. The non-aqueous organic solvent may be a carbonate-based, ester-based, ether-based, ketone-based, and/or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In embodiments, the ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, a double bond, an aromatic ring, and/or an ether bond, and the like); amides such as dimethylformamide; dioxolanes such as 1,3-dioxolane, 1,4-dioxolane, and/or the like; sulfolanes, and/or the like.

The non-aqueous organic solvent can be used alone or in a mixture of two or more types (or kind), and when two or more types (or kinds) are used in a mixture, a mixing ratio can be suitably or appropriately adjusted according to suitable or desired battery performance, which should be readily apparent to those working in the field upon reviewing this disclosure.

When using a carbonate-based solvent, a cyclic carbonate and a chain carbonate may be mixed together and used, and the cyclic carbonate and the chain carbonate may be mixed together in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed together and used in a volume ratio of about 1:1 to about 30:1.

The electrolyte solution may further include vinylethylene carbonate, vinylene carbonate, and/or an ethylene carbonate-based compound to improve battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one selected from LiPF₆, LiBF₄, LiSbF₆, LiAsF₆, LiClO₄, LiAlO₂, LiAlCl₄, LiPO₂F₂, LiCI, Lil, LiN(SO₃C₂F₅)₂, Li(FSO₂)₂N (lithium bis(fluorosulfonyl)imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

A concentration of lithium salt may be within the range of about 0.1 M to about 2.0 M. If the concentration of lithium salt is within the above range, the electrolyte solution has suitable or appropriate ionic conductivity and viscosity, and thus excellent performance can be achieved and lithium ions can move effectively.

### Separator

Depending on the type (or kind) of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, or a combination thereof on one or both surfaces of the porous substrate.

The porous substrate may be a polymer film including any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON), or a copolymer or mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acryl-based copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and a combination thereof, but is not limited thereto. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed together in one coating layer, or a coating layer including an organic material and a coating layer including an inorganic material may be stacked.

The thickness of the coating layer may be about 0.5 µm to about 20 µm, for example, about 1 µm to about 10 µm, or about 1 µm to about 5 µm.

Examples and comparative examples of the present disclosure are described below. However, the following examples are only example embodiments of the present disclosure, and the present disclosure is not limited to the following examples.

### Example 1

### 1. Preparation of Positive Electrode Active Material

### (1) Preparation of Large Particles of First Positive Electrode Active Material

A first lithium nickel-manganese-based composite oxide having a composition of Li_{1.05}Ni_{0.75}Mn_{0.23}Al_{0.02}O₂ in a form of secondary particles having an average particle diameter (D₅₀) of about 14 µm was prepared by mixing together Ni_{0.75}Mn_{0.23}Al_{0.02}(OH)₂ and LiOH in a molar ratio of 1:1.05 and then primarily heat-treating the mixture at 845 °C under an oxygen atmosphere for 8 hours.

A coating solution was prepared by adding aluminium sulfate to a distilled water solvent and then stirring the mixture at about 350 rpm for about 5 minutes. Whether or not the coating solution was colorless and transparent, i.e. the salt being completely dissolved, was checked. Subsequently, 500 g of the first lithium nickel-manganese-based composite oxide was added to the coating solution, while continuously stirring, for 15 minutes and then further stirred for about 45 minutes. An aluminium content in the aluminium sulfate was designed to be 1.0 mol% based on 100 mol% of a total metal content excluding lithium in final large particles. When the stirring was completed, its supernatant turned out to have a pH of 5.5. After removing the solvent from the mixed solution using an aspirator and a filter press, the resultant material was vacuum-dried at 190 °C to obtain a coated product.

The coated product was secondarily heat-treated at 750 °C for 8 hours under an oxygen atmosphere to prepare the large particles among the first positive electrode active material.

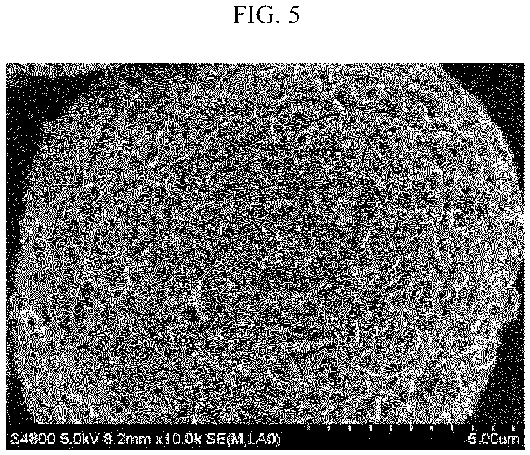

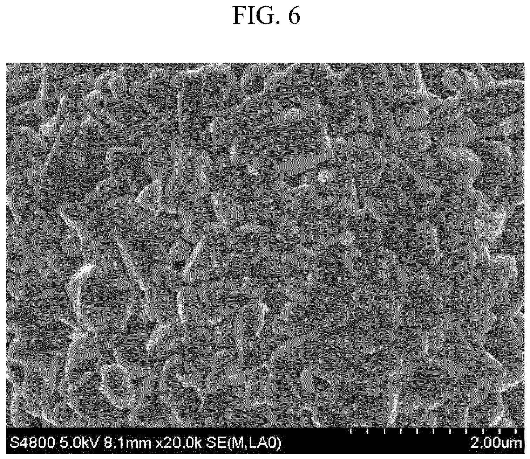

FIGS. 5-6 are SEM images of the large particles.

### (2) Preparation of Small Particles of First Positive Electrode Active Material

A second lithium nickel-manganese-based composite oxide having a composition of LiNi_{0.75}Mn_{0.23}Al_{0.02}O₂ in a form of single particles having an average particle diameter (D₅₀) of about 3 µm was prepared by mixing together Ni_{0.75}Mn_{0.23}Al_{0.02}(OH)₂, LiOH, and Al₂O₃ in a molar ratio of 1:1:0.02 and then, primarily heat-treating the mixture at 850 °C for 8 hours under an oxygen atmosphere.

After adding aluminium sulfate and yttrium nitrate to a distilled water solvent and mixing them, the second lithium nickel-manganese-based composite oxide was added thereto and then, mixed together for 45 minutes. An aluminium content of the aluminium sulfate and an yttrium content of the yttrium nitrate were designed respectively to be 0.4 mol% and 0.05 mol% based on 100 mol% of a total metal content excluding lithium in the final small particles. After removing the solvent from the solution, the resultant material was dried at 190 °C and then, secondarily heat-treated at 825 °C for 8 hours under an oxygen atmosphere to prepare small particles among the first positive electrode active material.

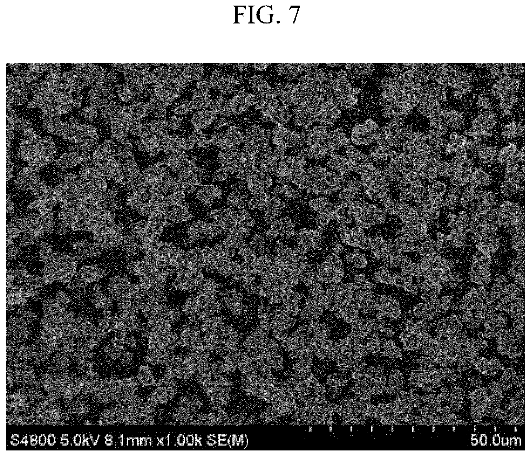

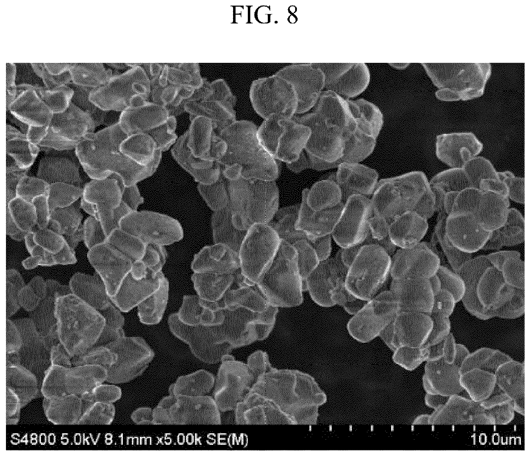

FIGS. 7-8 are SEM images of the prepared small particles.

### (3) Preparation of Second Positive Electrode Active Material

Ni_{0.35}Mn_{0.65}(OH)₂ and LiOH were mixed together to have a Li/(Ni+Mn) molar ratio of about 2.1 and then, heat-treated at 950 °C for 24 hours under an oxygen atmosphere to prepare a second positive electrode active material including a lithium-manganese-rich composite oxide (Li_{1.35}(Ni_{0.35}Mn_{0.65})_{0.65}O₂) in a form of secondary particles having an average particle diameter (D₅₀) of about 8 µm.

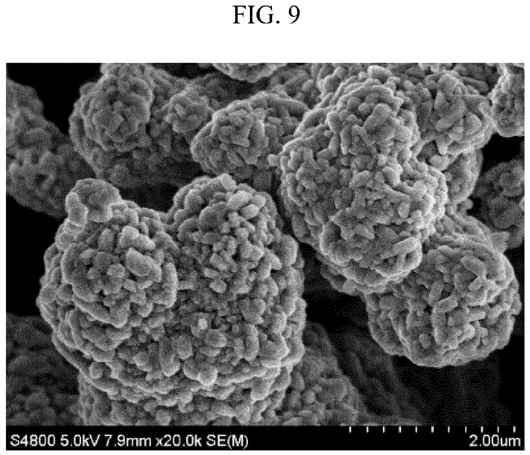

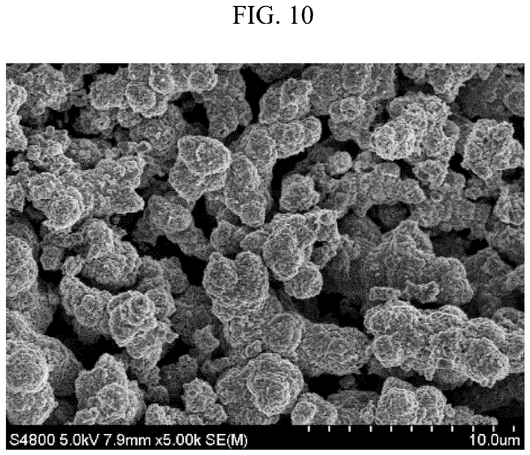

FIGS. 9-10 are SEM image of the second positive electrode active material.

### (4) Preparation of Final Positive Electrode Active Material

70 wt% of the large particles of the first positive electrode active material, 20 wt% of the small particles of the first positive electrode active material, and 10 wt% of the second positive electrode active material were mixed together to obtain a final positive electrode active material. The final positive electrode active material was pressed at a pressure of 4 tons for 30 seconds to measure pellet density, which was about 3.47 g/cc.

### 2. Manufacture of Rechargeable Lithium Battery Cell

98.5 wt% of the positive electrode active material, 1.0 wt% of a polyvinylidene fluoride binder, and 0.5 wt% of a carbon nanotube conductive material were mixed together to prepare a positive electrode active material layer slurry, and the slurry was coated on an aluminium foil current collector and then, dried and compressed to manufacture a positive electrode.

97.5 wt% of a graphite negative electrode active material, 1.5 wt% of carboxymethyl cellulose, and 1 wt% of a styrene butadiene rubber in a water solvent were mixed together to prepare a negative electrode active material layer slurry. The negative electrode active material layer slurry was coated on a copper foil current collector and then, dried and compressed to manufacture a negative electrode.

A polytetrafluoroethylene separator was used, and an electrolyte solution prepared by dissolving 1 M LiPF₆ in a mixed solvent of ethylene carbonate and dimethyl carbonate in a volume ratio of 3:7 was used to manufacture a rechargeable lithium battery cell in a common method.

### Example 2

A positive electrode active material and a rechargeable lithium battery cell were manufactured substantially in the same method as Example 1 except that 90 wt% of the large particles of the first positive electrode active material and 10 wt% of the second positive electrode active material were mixed together to prepare the final positive electrode active material.

The final positive electrode active material of Example 2 had a pellet density of about 3.10 g/cc.

### Comparative Example 1

A positive electrode active material and a rechargeable lithium battery cell were manufactured substantially in the same method as Example 1 except that 70 wt% of the large particles of the first positive electrode active material and 30 wt% of the small particles of the first positive electrode active material were mixed together to prepare the final positive electrode active material.

### Comparative Example 2

A positive electrode active material and a rechargeable lithium battery cell were manufactured substantially in the same method as Example 1 except that the large particles of the first positive electrode active material alone were used to prepare the final positive electrode active material.

### Comparative Example 3

A positive electrode active material and a rechargeable lithium battery cell were manufactured substantially in the same method as Example 1 except that the small particles of the first positive electrode active material alone were used to prepare the final positive electrode active material.

### Evaluation Example 1: Density of Positive Electrode Active material Layer

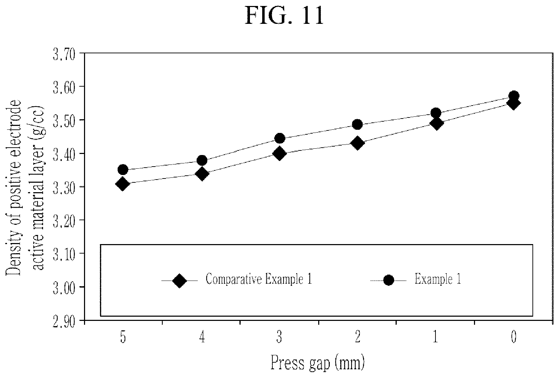

The positive electrode active material layers according to Example 1 and Comparative Example 1 were measured with respect to mixture density according to compression strength (i.e., press gap), and the results are shown in FIG. 11. Referring to FIG. 11, the compressed positive electrode active material layer of Example 1 exhibited a density of 3.52 g/cc, while that of Comparative Example 1 exhibited a density of 3.47 g/cc, which confirms that Example 1 realized higher density than Comparative Example 1.

### Evaluation Example 2: Evaluation of Battery Performance

The rechargeable lithium battery cells of Examples 1 and 2, in which a lithium-manganese-rich material as a second positive electrode active material was applied, were initially charged at 4.65 V and then, continuously charged by lowering the voltage to 4.45 V. In other words, the cells of Examples 1 and 2 were charged to 4.65 V at a constant current of 0.1 C, maintained at the same voltage until the current decreased to 0.05 C, and discharged to 2.5 V at a constant current of 0.1 C at 25 °C for first charge and discharge. Subsequently, the cells were charged to 4.45 V at a constant current of 0.2 C, maintained at the same voltage until the current became 0.05 C, and then, discharged to 2.5 V at a constant current of 0.2 C at 25 °C for second charge and discharge. In Table 1, second discharge capacity is shown as "1^{st} 4.65 V and 2^{nd} 4.45 V capacity."

Subsequently, the cells were charged and discharged for 50 cycles or more at 1.0 C within a voltage range of 3.0 V to 4.45 V at 45 °C to measure 50^{th} cycle discharge capacity, which was used to calculate a ratio of the 50^{th} cycle discharge capacity to the second discharge capacity, and the results are shown as "4.45 V cycle-life" in Table 1.

Separately, the rechargeable lithium battery cells of Comparative Examples 1 to 3 were charged to an upper limit voltage of 4.45 V at a constant current of 0.2 C, charged to 0.05 C at the constant voltage, and discharged to a cut-off voltage of 3.0 V at 0.2 C at 25 °C for initial charge and discharge. In Table 1, initial discharge capacity is shown as "4.45 V capacity."

Subsequently, the cells were charged and discharged for 50 cycles or more at 1.0 C within a voltage range of 3.0 V to 4.45 V at 45 °C to measure 50^{th} cycle discharge capacity, which was used to calculate a ratio of the 50^{th} cycle discharge capacity to the initial discharge capacity, and the results are shown as "4.45 V cycle-life" in Table 1.

**Table 1**

| | First positive electrode active material large particles | First positive electrode active material small particles | Second positive electrode active material | 1^{st} 4.65 V, 2^{nd} 4.45 V capacity (mAh/g) | 4.45 V capacity (mAh/g) | 4.45 V cycle-life (%, @50 cycles) |
|---|---|---|---|---|---|---|
| Example 1 | 70 wt% | 20 wt% | 10 wt% | 197.0 | - | 97.8 |
| Example 2 | 90 wt% | - | 10 wt% | 198.8 | - | 96.9 |
| Comparative Example 1 | 70 wt% | 30 wt% | - | - | 195.6 | 94.9 |
| Comparative Example 2 | 100 wt% | - | - | - | 195.2 | 88.9 |
| Comparative Example 3 | - | 100 wt% | - | - | 196.5 | 91.9 |

Referring to Table 1, Examples 1 and 2, compared with the comparative examples, exhibited an improved utilization rate of positive electrodes and improved cycle-life characteristics.

While the subject matter of this disclosure has been described in connection with what is presently considered to be practical example embodiments, it is to be understood that the present disclosure is not limited to the disclosed embodiments. On the contrary, the present disclosure is intended to cover various modifications and equivalent arrangements included within the scope of the appended claims, and equivalents thereof.

Embodiments are set out in the following clauses:
Clause 1: A positive electrode active material, comprising: a first positive electrode active material comprising a layered lithium nickel-manganese-based composite oxide; and a second positive electrode active material comprising a lithium-manganese-rich composite oxide in which a molar ratio of lithium to a total metal excluding lithium is about 1.1 to about 3 and a manganese content is greater than or equal to about 60 mol% based on 100 mol% of a total metal excluding lithium in the lithium-manganese-rich composite oxide.
Clause 2: The positive electrode active material of clause 1, wherein: the first positive electrode active material is included in an amount of 60 wt% to 95 wt% and the second positive electrode active material is included in an amount of 5 wt% to 40 wt% based on 100 wt% of the first positive electrode material and the second positive electrode active material.
Clause 3: The positive electrode active material of clause 1 or clause 2, wherein: the layered lithium nickel-manganese composite oxide of the first positive electrode active material has a nickel content of 60 mol% to 80 mol% and the manganese content of greater than or equal to 15 mol% based on 100 mol% of a total metal excluding lithium in the layered lithium nickel-manganese composite oxide.
Clause 4: The positive electrode active material of any preceding clause, wherein: the layered lithium nickel-manganese-based composite oxide further comprises aluminum and an aluminum content is 1 mol% to 3 mol% based on 100 mol% of a total metal excluding lithium in the layered lithium nickel-manganese-based composite oxide.
Clause 5: The positive electrode active material of clause 4, wherein: a concentration of aluminum in the layered lithium nickel-manganese-based composite oxide of the first positive electrode active material is uniform.
Clause 6: The positive electrode active material of any preceding clause, wherein: a cobalt content is 0 mol% to 0.01 mol% based on 100 mol% of a total metal excluding lithium in the layered lithium nickel-manganese-based composite oxide of the first positive electrode active material.
Clause 7: The positive electrode active material of any preceding clause, wherein: the layered lithium nickel-manganese-based composite oxide of the first positive electrode active material is represented by Chemical Formula 1:

   [Chemical Formula 1] Liₐ₁Niₓ₁Mn_{y1}Al_{z1}M¹_{w1}O_{2-b1}X_{b1}

   wherein in Chemical Formula 1, 0.9≤a1 ≤1.8, 0.6≤x1 ≤0.8, 0.1 ≤y1 ≤0.4, 0≤z1 ≤0.03, 0≤ w1 ≤0.3, 0.9≤x1+y1+z1+w1 ≤ 1.1, and 0≤b1 ≤0.1, M¹ is one or more elements selected from B, Ba, Ca, Ce, Cr, Fe, Mg, Mo, Nb, Si, Sn, Sr, Ti, V, W, Y, and Zr, and X is one or more elements selected from F, P, and S.
Clause 8: The positive electrode active material of any preceding clause, wherein: the first positive electrode active material comprises the core particles comprising the layered lithium nickel-manganese-based composite oxide, and the coating layer is on the surface of the core particles and comprises Al, B, Mg, Ti, V, W, Y, Zr, or a combination thereof.
Clause 9: The positive electrode active material of clause 8, wherein: the coating layer comprises Al and is in a form of a shell that continuously surrounds the surface of the core particles.
Clause 10: The positive electrode active material of clause 8 or clause 9, wherein: a thickness of the coating layer is 5 nm to 200 nm.
Clause 11: The positive electrode active material of any of clauses 8 to 10, wherein: the content of the coating layer is 0.1 mol% to 2 mol% based on 100 mol% of a total metal excluding lithium in the first positive electrode active material.
Clause 12: The positive electrode active material of any preceding clause, wherein: the first positive electrode active material comprises the large particles comprising the layered lithium nickel-manganese-based composite oxide and having an average particle diameter (D₅₀) of 10 µm to 25 µm and the small particles comprising the layered lithium nickel-manganese-based composite oxide and having an average particle diameter (D₅₀) of 0.5 µm to 8 µm.
Clause 13: The positive electrode active material of clause 12, wherein: the large particles are in a form of secondary particles provided by agglomerating a plurality of primary particles and the small particles are in a form of single particles.
Clause 14: The positive electrode active material of clause 12 or clause 13, wherein: the large particles are included in an amount of 60 wt% to 95 wt% and the small particles are included in an amount of 5 wt% to 40 wt% based on 100 wt% of a total of the large particles and the small particles.
Clause 15: The positive electrode active material of any of clauses 12 to 14, wherein: based on 100 wt% of a total of the large particles, the small particles, and the second positive electrode active material, the large particles are included in an amount of 40 wt% to 90 wt%,the small particles are included in an amount of 5 wt% to 40 wt%, and the second positive electrode active material is included in an amount of 5 wt% to 30 wt%.
Clause 16: The positive electrode active material of any of clauses 12 to 15, wherein: an average particle diameter (D₅₀) of the second positive electrode active material is smaller than an average particle diameter (D₅₀) of the large particles and larger than an average particle diameter (D₅₀) of the small particles.
Clause 17: The positive electrode active material of any of clauses 12 to 16, wherein: the large particles comprise the core particles in a form of secondary particles provided by agglomerating a plurality of primary particles and the coating layer is on the surface of the core particles and comprises Al, B, Mg, Ti, V, W, Y, Zr, or a combination thereof, and the small particles include the core particles in a form of single particles and the coating layer is on the surface of the core particles and comprises Al, B, Mg, Ti, V, W, Y, Zr, or a combination thereof.
Clause 18: The positive electrode active material of clause 17, wherein: the coating layer of the large particles comprises Al, Zr, or a combination thereof, and the coating layer of the small particles comprises Al, Y, or a combination thereof.
Clause 19: The positive electrode active material of clause 17 or clause 18, wherein: the coating layer of the large particles comprises Al and the Al content of the coating layer is 0.5 mol% to 2 mol% based on 100 mol% of a total metal excluding lithium in the large particles, and the coating layer of the small particles comprises Al and the Al content of the coating layer is 0.1 mol% to 1 mol% based on 100 mol% of a total metal excluding lithium in the small particles.
Clause 20: The positive electrode active material of clause 19, wherein: the small particles further comprise Y and a Y content of the coating layer is 0.01 mol% to 0.5 mol% based on 100 mol% of a total metal excluding lithium in the small particles.
Clause 21: The positive electrode active material of any preceding clause wherein: the lithium-manganese-rich composite oxide of the second positive electrode active material is represented by Chemical Formula 2:

   [Chemical Formula 2] Li₁₊ₓ₂(Ni_{y2}Mn_{z2}M²_{1-y2-z2})₁₋ₓ₂O_{2-b2}X_{b2}

   wherein, in Chemical Formula 2, 0.04≤x2≤0.5, 0.1 ≤y2≤0.5, 0.5≤z2≤0.9, and 0≤b2≤ 0.1, M² is one or more elements selected from Al, B, Ba, Ca, Ce, Cr, Fe, Mg, Mo, Nb, Si, Sn, Sr, Ti, V, W, Y, and Zr, and X is one or more elements selected from F, P, and S.
Clause 22: The positive electrode active material of any preceding clause wherein: the second positive electrode active material is in a form of secondary particles provided by agglomerating a plurality of primary particles.
Clause 23: The positive electrode active material of any preceding clause, wherein: an average particle diameter (D₅₀) of the second positive electrode active material is 3 µm to 13 µm.
Clause 24: The positive electrode active material of any preceding clause wherein: the cobalt content is 0 mol% to 0.01 mol% based on 100 mol% of a total metal excluding lithium in the lithium-manganese-rich composite oxide of the second positive electrode active material.
Clause 25: The positive electrode active material of any preceding clause wherein: a pellet density of the positive electrode active material layer is 3.0 g/cc to 3.7 g/cc.
Clause 26: A positive electrode, comprising: a positive electrode current collector, and a positive electrode active material layer on the positive electrode current collector, wherein the positive electrode active material layer comprises the positive electrode active material of any one of clauses 1 to 25.
Clause 27: The positive electrode of clause 26, wherein: a density of the positive electrode active material layer is 3.3 g/cc to 3.7 g/cc.
Clause 28: A rechargeable lithium battery, comprising: the positive electrode of clause 26 or clause 27, a negative electrode, and an electrolyte.
Clause 29: The rechargeable lithium battery of clause 28, wherein: an initial charging voltage is greater than or equal to 4.60 V, and a subsequent charging voltage is lower than the initial charging voltage and greater than or equal to 4.45 V.

### Description of Symbols

100: rechargeable lithium battery 10: positive electrode
11: positive electrode lead tab 12: positive terminal
20: negative electrode 21: negative electrode lead tab
22: negative terminal 30: separator
40: electrode assembly 50: case
60: sealing member 70: electrode tab
71: positive electrode tab 72: negative electrode tab

## Claims

1. A positive electrode active material, comprising:
a first positive electrode active material comprising a layered lithium nickel-manganese-based composite oxide; and
a second positive electrode active material comprising a lithium-manganese-rich composite oxide in which a molar ratio of lithium to a total metal excluding lithium is about 1.1 to about 3 and a manganese content is greater than or equal to about 50 mol% based on 100 mol% of a total metal excluding lithium in the lithium-manganese-rich composite oxide.

2. The positive electrode active material as claimed in claim 1, wherein:
(i) the first positive electrode active material is included in an amount of 60 wt% to 95 wt% and the second positive electrode active material is included in an amount of 5 wt% to 40 wt% based on 100 wt% of the first positive electrode material and the second positive electrode active material, and/or
(ii) the layered lithium nickel-manganese-based composite oxide of the first positive electrode active material has a nickel content of greater than or equal to 60 mol% and a manganese content of greater than or equal to 10 mol% based on 100 mol% of a total metal excluding lithium in the layered lithium nickel-manganese-based composite oxide, and/or
(iii) the layered lithium nickel-manganese-based composite oxide further comprises aluminium and an aluminium content is greater than 0 mol% and less than and equal to 3 mol% based on 100 mol% of a total metal excluding lithium in the layered lithium nickel-manganese-based composite oxide, optionally wherein
a concentration of aluminium in the layered lithium nickel-manganese-based composite oxide of the first positive electrode active material is uniform.

3. The positive electrode active material as claimed in claim 1 or claim 2, wherein:
a cobalt content is 0 mol% to 0.01 mol% based on 100 mol% of a total metal excluding lithium in the layered lithium nickel-manganese-based composite oxide of the first positive electrode active material.

4. The positive electrode active material as claimed in any preceding claim, wherein:
the layered lithium nickel-manganese-based composite oxide of the first positive electrode active material is represented by Chemical Formula 1:
[Chemical Formula 1] Liₐ₁Niₓ₁Mn_{y1}Al_{z1}M¹_{w1}O_{2-b1}X_{b1}
wherein in Chemical Formula 1, 0.9≤a1 ≤1.8, 0.6≤x1 ≤0.8, 0.1 ≤y1 ≤0.4, 0≤z1≤ 0.03, 0≤w1 ≤0.3, 0.9≤x1+y1+z1+w1 ≤ 1.1, and 0≤b1 ≤0.1, M¹ is one or more elements selected from B, Ba, Ca, Ce, Cr, Fe, Mg, Mo, Nb, Si, Sn, Sr, Ti, V, W, Y, and Zr, and X is one or more elements selected from F, P, and S.

5. The positive electrode active material as claimed in any preceding claim, wherein:
the first positive electrode active material comprises core particles comprising the layered lithium nickel-manganese-based composite oxide, and
a coating layer on the surface of the core particles and comprising Al, B, Mg, Ti, V, W, Y, Zr, or a combination thereof, optionally wherein
(i) the coating layer comprises Al and is in a form of a shell that continuously surrounds the surface of the core particles, and/or
(ii) a thickness of the coating layer is 5 nm to 200 nm, and/or
(iii) a content of a coating element of the coating layer is 0.01 mol% to 5 mol% based on 100 mol% of a total metal excluding lithium in the first positive electrode active material.

6. The positive electrode active material as claimed in any preceding claim, wherein:
the first positive electrode active material comprises large particles comprising the layered lithium nickel-manganese-based composite oxide and having an average particle diameter (D₅₀) of 10 µm to 25 µm and small particles comprising the layered lithium nickel-manganese-based composite oxide and having an average particle diameter (D₅₀) of 0.5 µm to 8 µm.

7. The positive electrode active material as claimed in claim 6, wherein:
(i) the large particles are in a form of secondary particles provided by agglomerating a plurality of primary particles and the small particles are in a form of single particles, and/or
(ii) the large particles are included in an amount of 60 wt% to 95 wt% and the small particles are included in an amount of 5 wt% to 40 wt% based on 100 wt% of a total of the large particles and the small particles, and/or
(iii) based on 100 wt% of a total of the large particles, the small particles, and the second positive electrode active material,
the large particles are included in an amount of 40 wt% to 90 wt%,
the small particles are included in an amount of 5 wt% to 40 wt%, and
the second positive electrode active material is included in an amount of 5 wt% to 30 wt%, and/or
(iv) an average particle diameter (D₅₀) of the second positive electrode active material is smaller than an average particle diameter (D₅₀) of the large particles and larger than an average particle diameter (D₅₀) of the small particles.

8. The positive electrode active material as claimed in claim 6 or claim 7, wherein:
the large particles comprise core particles in a form of secondary particles provided by agglomerating a plurality of primary particles and a coating layer is on the surface of the core particles of the large particle and comprises Al, B, Mg, Ti, V, W, Y, Zr, or a combination thereof, and
the small particles include core particles in a form of single particles and a coating layer is on the surface of the core particles of the small particles and comprising Al, B, Mg, Ti, V, W, Y, Zr, or a combination thereof, optionally wherein:
the coating layer of the large particles comprises Al, Zr, or a combination thereof, and
the coating layer of the small particles comprises Al, Y, or a combination thereof.

9. The positive electrode active material as claimed in claim 8, wherein:
the coating layer of the large particles comprises Al and a Al content of the coating layer is 0.5 mol% to 2 mol% based on 100 mol% of a total metal excluding lithium in the large particles, and
the coating layer of the small particles comprises Al and a Al content of the coating layer is 0.1 mol% to 1 mol% based on 100 mol% of a total metal excluding lithium in the small particles, optionally wherein:
the coating layer of the small particles further comprise Y and a Y content of the coating layer of the small particles is 0.01 mol% to 0.5 mol% based on 100 mol% of a total metal excluding lithium in the small particles.

10. The positive electrode active material as claimed in any preceding claim wherein:
the lithium-manganese-rich composite oxide of the second positive electrode active material is represented by Chemical Formula 2:
[Chemical Formula 2] Li₁₊ₓ₂(Ni_{y2}Mn_{z2}M²_{1-y2-z2})₁₋ₓ₂O_{2-b2}X_{b2}
wherein, in Chemical Formula 2, 0.04≤x2≤0.5, 0.1 ≤y2≤0.5, 0.5≤z2≤0.9, and 0 ≤b2≤0.1, M² is one or more elements selected from Al, B, Ba, Ca, Ce, Cr, Fe, Mg, Mo, Nb, Si, Sn, Sr, Ti, V, W, Y, and Zr, and X is one or more elements selected from F, P, and S.

11. The positive electrode active material as claimed in any preceding claim wherein:
(i) the second positive electrode active material is in a form of secondary particles provided by agglomerating a plurality of primary particles, and/or
(ii) an average particle diameter (D₅₀) of the second positive electrode active material is 3 µm to 13 µm, and/or
(iii) a cobalt content is 0 mol% to 0.01 mol% based on 100 mol% of a total metal excluding lithium in the lithium-manganese-rich composite oxide of the second positive electrode active material, and/or
(iv) a pellet density of the positive electrode active material layer is 3.0 g/cc to 3.7 g/cc.

12. A positive electrode, comprising:
a positive electrode current collector, and
a positive electrode active material layer on the positive electrode current collector,
wherein the positive electrode active material layer comprises the positive electrode active material as claimed in any one of claims 1 to 11.

13. The positive electrode as claimed in claim 12, wherein:
a density of the positive electrode active material layer is 3.3 g/cc to 3.7 g/cc.

14. A rechargeable lithium battery, comprising:
the positive electrode as claimed in claim 12 or claim 13,
a negative electrode, and
an electrolyte.

15. The rechargeable lithium battery as claimed in claim 14, wherein:
an initial charging voltage is greater than or equal to 4.60 V, and
a subsequent charging voltage is lower than the initial charging voltage and greater than or equal to 4.45 V.
